# FASCICULE DE BREVET EUROPEEN

(11) **EP 0 628 334 B1**
(45) Date de publication et mention de la délivrance du brevet: **26.03.2003**
(21) Numéro de dépôt: 94401302.8
(22) Date de dépôt: 10.06.1994
(51) Int. Cl.: B01D 35/14

(54) **Dispositif et cassette sécurisés de filtration d'un fluide et procédé de remplacement d'une cassette de filtration sécurisée dans un dispositif correspondant**
Gesicherte Filtervorrichtung und Filterkartusche zur Flüssigkeitsfiltrierung und Verfahren zum gesicherten Austausch einer Filterkartusche in einer entsprechenden Filtervorrichtung
Filter device and cartridge for fluid filtration and method of secure replacement of a filter cartridge in a corresponding device

(30) Priorité: 10.06.1993 FR 9306989; 10.06.1993 FR 9306990; 10.06.1993 FR 9306991
(43) Date de publication de la demande: 14.12.1994
(73) Titulaire: Buisson, Philippe, CH-2608 Courtelary (CH)
(72) Inventeur: Buisson, Philippe, F-69780 Toussieu (FR); Piccardi, Michel, F-69300 Caluire (FR); Godet, Christian, F-69008 Lyon (FR)
(74) Mandataire: Casalonga, Axel

(56) Documents cités:
- EP-A- 0 223 323
- US-A- 3 542 202

## Description

L'invention concerne la filtration d'un fluide, notamment un liquide.

Bien que l'invention n'y soit nullement limitée, elle s'applique avantageusement dans le milieu médical où la prévention des risques infectieux dus à l'eau et/ou à l'air environnant revêt une grande importance. Les modes de transmission des bactéries et germes infectieux sont actuellement attribués en majeure partie à l'eau utilisée au nettoyage en général et au lavage chirurgical en particulier. L'invention trouve donc une application particulièrement avantageuse à la filtration de liquides tels que de l'eau, facteur de loin le plus important de la contamination.

De nombreuses solutions existent actuellement pour assurer la production d'une eau parfaitement stérile, telle que la stérilisation par rayonnement UV, la stérilisation par hypochlorite de soude ou par micro-filtration à l'aide de membranes ou encore par adjonction de produits de désinfection.

Un des facteurs de garantie de l'obtention d'une eau stérile est l'utilisation d'un procédé pouvant être mis en oeuvre le plus en aval possible vers l'utilisateur pour prévenir notamment les risques de contamination occasionnés par les robinets diffusant une eau qui aurait déjà été rendue stérile par une installation en amont. L'utilisation d'une cassette de filtration à membrane, logée dans un bloc de filtration directement monté sur le robinet, permet de s'affranchir de ces inconvénients, au moins temporairement.

Cependant, pour être efficace, la cassette de filtration installée en bout de robinet doit être changé régulièrement. Or, même si le sérieux et la conscience professionnelle du personnel utilisateur ou du personnel d'entretien ne peut être mis en cause. Il n'est pas exclu que des erreurs puissent être commises en réinstallant dans le bloc de filtration une cassette de filtration usagée au lieu d'une nouvelle.

GB-A-2 252 514 décrit un dispositif de filtration comportant une cassette de filtration équipée d'un collier lors d'un dévissage manuel de la cassette, le collier prend une position différente, interdisant un nouveau verrouillage correct de la cassette usagée.

Il peut être également prévu d'associer au moyen de filtration installé en bout de robinet des moyens pour comptabiliser le nombre d'utilisations ou la durée écoulée depuis sa mise en place. Or, les moyens utilisés sont actuellement rudimentaires en ce sens qu'il est prévu que le personnel compétent effectue un marquage manuel de cases préimprimées sur le dispositif de filtration ou bien procède à l'enlèvement d'étiquettes, ou bien encore mémorise tout simplement approximativement les dates successives de mise en place. Aussi, même si le sérieux et la conscience professionnelle du personnel utilisateur ou du personnel d'entretien ne peut être mis en cause, de tels procédés ne sont pas à l'abri d'erreurs ou d'oublis.

De plus, les cassettes de filtration sont soumises aux "coups de bélier" éventuels se produisant dans les canalisations, et qui peuvent notamment provoquer une déchirure de la membrane, bien qu'une telle déchirure puisse provenir également d'autres causes.

Un but de l'invention est de différencier une cassette usagée d'une cassette neuve et de n'autoriser qu'une seule utilisation d'une cassette de filtration.

L'invention a également pour but d'interdire le remplacement d'une cassette de filtration usagée par une cassette de filtration non appropriée.

Telle que revendiquée, l'invention a pour objet un dispositif de filtration d'un fluide, comprenant
une cassette de filtration du fluide destinée à délivrer un fluide filtré et comportant un corps de cassette équipé d'une membrane de filtration, ledit corps de cassette possédant une extension latérale comportant une partie sectionnable et complètement séparable du reste de la cassette, et
un corps de dispositif comportant une entrée de fluide, communiquant avec un logement recevant ladite cassette de filtration une sortie pour le fluide filtré, des moyens de verrouillage/déverrouillage actionnables entre une position de verrouillage de la cassette de filtration dans son logement et une position de déverrouillage de la cassette de filtration, des moyens de sectionnement actionnés par les moyens de verrouillage/déverrouillage lors du passage de leur position de verrouillage à leur position de déverrouillage pour sectionner la pertie sectionnable de la cassette de filtration, et des moyens de sécurité aptes à interdire le verrouillage dans son logement, par les moyens de verrouillage/déverrouillage, d'une cassette de filtration amputée d'une telle partie sectionnable.

Ainsi, une cassette sectionnée est synonyme d'une cassette usagée, et ne pourra pas être confondue avec une cassette neuve lors d'un remplacement.

Selon un mode de réalisation de l'invention, les moyens de verrouillage/déverrouillage comportent un pignon denté susceptible d'être déplacé en rotation entre une position de verrouillage et une positionde déverrouillage. Le logement de la cassette comporte alors une partie annexe apte à loger la partie sectionnable de la cassette et les moyens de sectionnement comportent une première crémaillère coopérant avec le pignon denté pour être guidée, dans un passage du corps de dispositif débouchant dans la partie annexe du logement de la cassette, en direction de la partie sectionnable de celle-ci, lors du passage de la position de verrouillage la position de déverrouillage; les moyens de sectionnement comportent également un organe de sectionnement susceptible de pénétrer dans ladite partie annexe du logement de la cassette, lors du déplacement de la première crémaillère, pour sectionner la partie sectionnable de la cassette.

Selon un mode de réalisation de l'invention, les moyens de verrouillage/déverrouillage comportent une deuxième crémaillère, coopérant avec ledit pignon denté, guidée en translation et possédant à une extrémité un moyen d'appui destiné à venir en contact de la cassette de filtration dans la position de verrouillage et à être maintenu à distance de celle-ci dans la position de déverrouillage. Les moyens de sécurité comportent alors un organe de blocage logé dans un logement auxiliaire du corps débouchant dans ladite partie annexe du logement de la cassette, monté déplaçable dans le logement auxiliaire, pour pénétrer dans la partie annexe du logement de la cassette après sectionnement de la partie sectionnable et prendre une position de blocage dans laquelle il coopère avec l'organe de sectionnement pour interdire sa remontée dans le passage et donc le retour des moyens de verrouillage/déverrouillage dans leur position de verrouillage, jusqu'à l'insertion dans ladite partie annexe du logement de la cassette d'une partie sectionnable d'une nouvelle cassette.

Dans ladite position de blocage de l'organe de blocage, l'organe de sectionnement obture avantageusement au moins partiellement ladite partie annexe de logement, et la partie sectionnable de la cassette et l'organe de sectionnement comportent des profils conjugués prédéterminés aptes à coopérer mutuellement pour autoriser l'insertion de la partie sectionnable dans ladite partie annexe de logement lors de l'insertion d'une cassette dans son logement. La partie sectionnable ainsi insérée dans la partie annexe de logement est apte à déplacer l'organe de blocage depuis sa position de blocage jusqu'à une position de déblocage dans laquelle il est exempt de contact avec l'organe de sectionnement pour permettre la remontée de ce dernier dans le passage et le retour des moyens de verrouillage/déverrouillage dans leur position de verrouillage.

L'organe de blocage est de préférence repoussé dans sa position de déblocage sous rappel élastique, et le dispositif comporte au moins un moyen de blocage auxiliaire de la partie sectionnable de la cassette dans ladite partie annexe de logement.

Selon un mode de réalisation, le corps de casssette comporte une extension latérale, munie d'une zone d'affaiblissement, formant ladite partie sectionnable.

L'invention a également pour objet un procédé de remplacement d'une cassette de filtration verrouillée dans un logement d'un dispositif de filtration d'un fluide équipé de moyens actionnables de verrouillage/déverrouillage de la cassette. Selon une caractéristique générale de l'invention on sectionne, lors de l'actionnement des moyens de verrouillage/déverrouillage, une partie prédéterminée de la cassette et on ampute complètement la cassette de la partie prédéterminée sectionnée pour permettre l'extraction de ladite cassette hors du logement, et on interdit le verrouillage de toute cassette de remplacement amputée d'une telle partie sectionnable, en empêchant l'actionnement des moyens de verrouillage/déverouillage.

D'autres avantages et caractéristiques de l'invention apparaîtront à l'examen de la description détaillé de plusieurs modes de réalisation de l'invention nullement limitatifs et des dessins annexés sur lesquels :
- la figure 1 est une coupe schématique d'un premier mode de réalisation d'un dispositif selon l'invention,
- la figure 2 illustre schématiquement plus en détail une partie du dispositif de la figure 1,
- la figure 3 est la coupe selon la ligne III-III de la figure 2, et
- les figures 4 à 14 illustrent différents cas de fonctionnement du dispositif selon l'invention,
- la figure 15 est une vue de dessus schématique d'un autre mode de réalisation d'une cassette pour le dispositif selon l'invention,
- la figure 16 est la coupe selon la ligne II-II de la figure 15,
- la figure 17 illustre plus en détail un détail L de la figure 16,
- la figure 18 est une coupe de la cassette de la figure 15 dans un cas normal de fonctionnement sans rupture de membrane, et
- la figures 19 et 20 illustrent un autre mode de réalisation d'une cassette pour le dispositif selon l'invention,

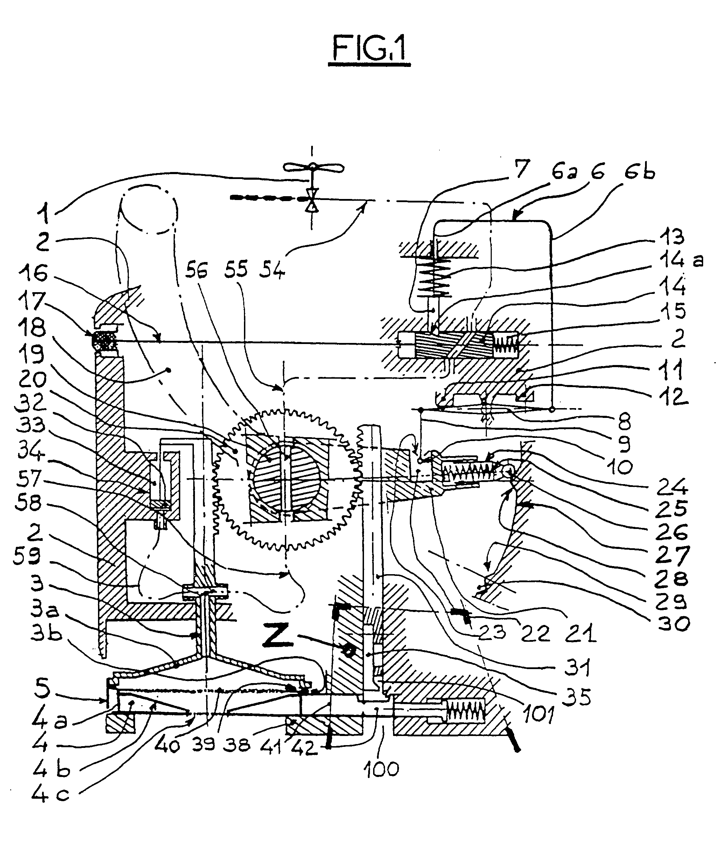

Bien que l'invention n'y soit nullement limitée, le dispositif de filtration illustré sur la figure 1 comporte un orifice d'entrée destiné à être fixé sur l'embout d'un robinet 1 susceptible de délivrer un liquide à filtrer. Le dispositif comporte un corps 2 logeant une canalisation comportant plusieurs parties référencées 54, 55, 56, 57, 58, 59 et susceptibles d'acheminer le liquide depuis l'orifice d'entrée du corps vers une cassette ou moyen de filtration 4, située sur un support 38 et susceptible de délivrer en sortie du dispositif le fluide filtré.

La cassette de filtration 4, reposant sur le porte-cassette 38, est destinée à être insérée dans un logement du dispositif susceptible d'être obturé par un écran 5 solidaire de la partie conique de la crémaillère porte-chambre 3. Cette cassette de filtration 4 comporte une paroi extérieure 4a portant un joint d'étanchéité 39, un cône de réception 4b du liquide à filtrer, un système d'homogénéisation 4c du liquide filtré, situé à la sortie de la cassette, et une membrane de filtration ou de microfiltration 40. Par ailleurs, le corps de cette cassette comporte une extension latérale 41 munie, de deux entailles 43 formant une zone d'affaiblissement pour cette extension latérale la rendant ainsi aisément sectionnable par un organe de sectionnement approprié.

La partie sectionnable de cette extension latérale possède par ailleurs un profil prédéterminé 42, dont la fonction sera explicité plus en détail ci-après, et est susceptible d'être insérée, au travers d'une grille 44 dont le profil est adapté à celui de l'extension 41 dans un prolongement, ou partie annexe 100, du logement de la cassette.

Le dispositif comporte par ailleurs une première crémaillère 31, dite "crémaillère de prise de puissance", et une deuxième crémaillère 3 ou "crémaillère porte-chambre".

La crémaillère porte-chambre 3, est guidée en translation dans le corps 2 du dispositif. Une première extrémité de cette crémaillère porte-chambre 3 est conformée en une chambre conique 3a limitée par une couronne d'appui 3b destinée à être maintenue à distance ou à venir en contact avec le moyen de filtration 4. Un passage ménagé dans cette crémaillère réalise ainsi la partie terminale 58 de la canalisation. L'autre extrémité de cette crémaillère 3, est liée à la tige d'actionnement d'un piston 32 susceptible de coulisser dans une chambre à dépression 33 en vue de constituer un système anti-goutte 34. Cette chambre à dépression 33 communique avec le passage creux de la crémaillère assurant la partie terminale de la canalisation, par un tuyau souple 59.

Cette crémaillère porte-chambre 3, constitue un élément d'un ensemble de manoeuvre formant des moyens de verrouillage / déverrouillage de la cassette de filtration 4 sur son support 38. Ces moyens de déverrouillage/déverrouillage comportent également une poignée de manoeuvre 18 dont l'axe de poignée 19, percé, d'un canal interne 56, est solidaire d'un pignon denté 20 et d'un bras porte-galet 21 comportant un évidement borgne 22 dont l'ouverture est équipée d'un système de clipsage 23. L'extrémité libre du bras 21 comporte un porte-galet 24 à ressort 25, muni du galet 26.

Ce galet 26 peut circuler sur un chemin de roulement 27 ménagé dans le corps 2 du dispositif et comportant un premier bossage, ou bossage avant, 28 et un deuxième bossage, ou bossage arrière, 29 espacés l'un de l'autre d'une distance prédéterminée. Le bossage 29 est adjacent à une encoche 30.

Le dispositif comporte également des moyens d'obturation de la canalisation. Ces moyens d'obturation comportent un élément d'obturation, ou vanne, 14 monté à coulissement dans un logement du corps 2 et traversé par un passage interne. Cette vanne 14 peut ainsi occuper une première position dans laquelle son passage interne communique avec les parties 54 et 55 de la canalisation pour permettre la circulation du liquide dans cette canalisation et à travers le passage interne, et une deuxième position dans laquelle ledit passage interne ne coïncide plus avec les parties correspondantes de la canalisation et obture donc celles-ci pour interdire toute circulation de liquide. La vanne 14 peut ainsi passer de sa première position à sa deuxième position par l'intermédiaire d'un ressort de vanne 15 dont le réarmement est manuel par l'intermédiaire d'une tige de commande manuelle 16 à l'extrémité de laquelle est prévu un bouton de réarmement 17 susceptible de déboucher hors du corps 2 du dispositif lorsque la vanne est dans sa deuxième position.

Il est également prévu des moyens de déclenchement, aptes à coopérer avec les moyens de verrouillage/déverrouillage, pour agir sur la vanne 14 et la faire passer de sa première position à sa deuxième position.

Ces moyens de déclenchement comportent, outre le ressort de vanne 15, un élément 7, agissant comme un verrou, et susceptible d'être encliqueté sous l'action d'un ressort 13, dans une encoche ménagée sur la surface latérale de la vanne 14.

Les moyens de déclenchement comportent par ailleurs une pièce de transmission 6 montée coulissante dans le corps du dispositif 2.

Cette pièce de transmission 6 possède un premier bras 6a destiné à actionner le verrou et un deuxième bras 6b, relié par l'intermédiaire d'un levier pivotant 8 et d'une tige relais 9 susceptible de pénétrer dans l'évidement borgne 22 du bras porte-galet 21, aux moyens de verrouillage/déverrouillage. La course du levier 8 est limitée par une butée avant 11 et une butée arrière 12 ménagées dans le corps du dispositif, et situées de part et d'autre de l'axe de ce levier.

La crémaillère prise de puissance 31, coopérant également avec le pignon denté 20, mais en un endroit diamètralement opposé à celui où coopère la crémaillère porte-chambre, comporte, à son extrémité libre 31a, un évidement 31b en forme de T ayant comme grande largeur correspondant à la barre transversale du T, la largeur L1, et comme largeur du canal débouchant 31c de cet évidement, la largeur L3. La largeur L3 du canal débouchant 31c de l'évidement 31b doit être, pour des raison qui seront explicitées plus en détail, plus importante que la dimension transversale L4 de l'extension latérale 41 de la cassette de filtration.

Cette crémaillère 31 est guidée en translation dans un passage 101 du corps de dispositif 2, communiquant avec la partie annexe du logement de la cassette.

Par ailleurs, la crémaillère 31 comporte, au voisinage de son extrémité libre, un organe de sectionnement 35 composé d'une pièce articulée autour d'un axe 36 portée par la crémaillère 31. Cet organe de sectionnement comporte essentiellement une partie supérieure plaquée en permanence contre la face F de la crémaillère par un ressort de rappel 37 disposé entre une extrémité de cette partie supérieure de l'organe de sectionnement et la crémaillère 31. La partie supérieure de l'organe de sectionnement est prolongée par une partie inférieure inclinée dont la face inférieure est destinée, comme on le verra plus en détail ci-après, à venir en contact de la partie sectionnable de la cassette en vue de son sectionnement. Par ailleurs, cette partie inférieure inclinée est conformée en forme de pied s'étendant sensiblement perpendiculairement à la direction du passage de guidage 101 de la crémaillère 31 et sensiblement parallèlement à la partie sectionnable de la cassette.

Le corps de dispositif 2 comporte par ailleurs un logement auxiliaire 103 débouchant à une extrémité dans la partie annexe 100 du logement de la cassette et fermé à son autre extrémité par un ou plusieurs bouchons 52 portés par une plaque de fermeture 53 liée au corps du dispositif 2. Ce logement auxiliaire contient un organe de blocage, ou poussoir-verrou, 50, de section rectangulaire, monté sous rappel élastique par l'intermédiaire d'un ou de plusieurs ressorts 51 s'appuyant sur le ou les bouchons 52. Comme on le verra ci-après, cet organe de blocage 50 est monté déplaçable dans le logement auxiliaire pour pénétrer dans la partie annexe du logement de la cassette, après sectionnement de la partie sectionnable de cette dernière, et prendre une position de blocage dans laquelle il coopère avec l'organe de sectionnement 35 pour interdire la remontée de ce dernier dans le passage de guidage 101 de la crémaillère de prise de puissance, et donc le retour des moyens de verrouillage/déverrouillage dans leur position de verrouillage, et ce, jusqu'à l'insertion dans ladite partie annexe 100 du logement de la cassette, à travers la grille 44, d'une partie sectionnable d'une nouvelle cassette de filtration.

A cet égard, la largeur L1 de l'évidement 31b est choisie supérieure à la largeur (dimension transversale) L2 du logement auxiliaire 103 et donc du verrou 50 et la largeur L3 du canal débouchant 31c doit être inférieure à la largeur L2, de préférence dans un rapport de 30 à 70%.

Par ailleurs, le corps de dispositif comporte un autre logement 104 contenant un secteur pivotant 45 autour d'un axe 47 fixé dans le corps de dispositif 2. Ce secteur pivotant 45, muni à une de ses extrémités d'un crochet 46 est susceptible de pivoter autour de l'axe 47 sous rappel élastique par l'intermédiaire d'un ressort 48 dont le réglage de la force de rappel peut être effectué par l'intermédiaire d'un bouchon 49 solidaire de la plaque de fermeture 53. De par l'action du ressort 48, le crochet 46 est naturellement amené à venir coopérer avec l'extrémité correspondante 105 en forme de crochet de l'extension latérale de la cassette de filtration pour assurer ainsi son blocage dans ladite partie annexe 100 du logement de la cassette.

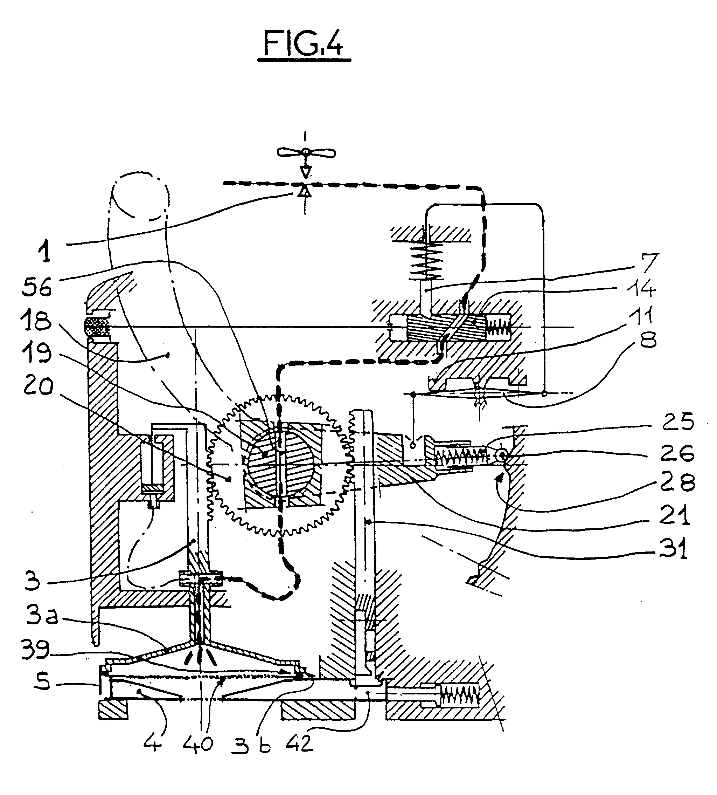

On se réfère maintenant plus particulièrement aux figures 4 et suivantes pour illustrer le fonctionnement du dispositif selon l'invention.

La figure 4 illustre un fonctionnement normal du dispositif de filtration.

L'ouverture du robinet 1 permet au liquide à filtrer de circuler dans la canalisation. La vanne 14 est ouverte et maintenue dans cette position par le verrou 7. Le levier 8 est en appui contre la butée avant 11. Les moyens de verrouillage/déverrouillage sont en position de verrouillage, autorisant le passage du liquide à filtrer dans le canal 56. La chambre 3a, à l'extrémité de la crémaillère porte-chambre 3 est appliquée en pression sur le joint d'étanchéité 39 de la cassette de filtration 4 par sa couronne d'appui 3b. La pression de serrage est maintenue par l'effort déployé par le ressort de galet 25 comprimé par le galet 26 situé de l'autre côté du bossage avant 28. En effet, l'une des composantes de la poussée exercée sur le galet 26, qui s'appuie sur la rampe du bossage 28, tend à maintenir les moyens de verrouillage/déverrouillage dans cette position de verrouillage.

La crémaillère prise de puissance 31 est en position haute et la cassette de filtration 4 est verrouillée dans son logement, l'extension latérale 42 étant enfoncée dans la partie annexe 100 du logement à travers la grille 44. Le poussoir- verrou 50, sous l'effet du ressort 51, s'appuie contre l'extrémité de l'extension latérale de la cassette et reste ainsi dans le logement auxiliaire 103. L'écran 5, baissé, empêche tout accès à la cassette et le liquide peut s'écouler librement à travers la membrane 40 pour être filtré par celle-ci.

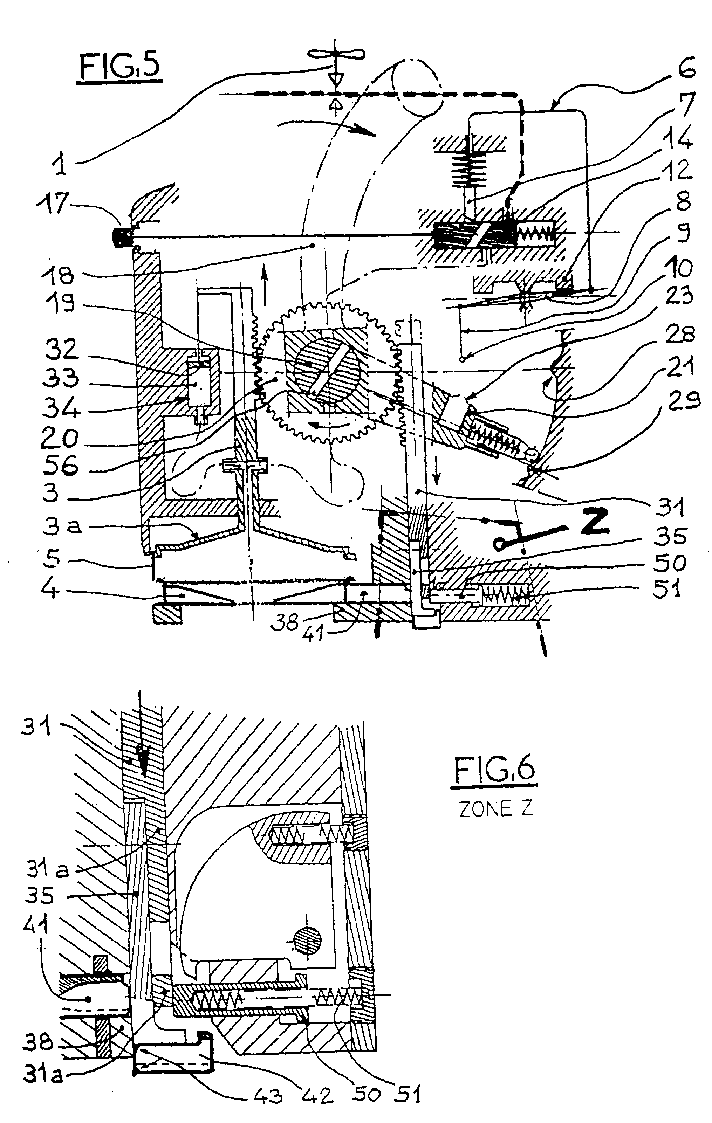

Les figures 5 et 6 correspondent à une préouverture du dispositif en vue d'accéder à la cassette à remplacer.

Pour effectuer cette opération il est souhaitable mais non obligatoire que le robinet 1 soit fermé. Les moyens de verrouillage/déverrouillage sont actionnés par l'intermédiaire de la poignée 18 jusqu'à ce que le galet 26 atteigne le deuxième bossage 29. Cette action provoque la remontée de la crémaillère porte-chambre 3 ce qui permet la préouverture de la chambre conique 3a et libère en partie l'accès à la cassette de filtration 4 qui ne peut cependant pas être dégagée de son logement car l'écran 5 n'est pas assez relevé. Simultanément, ce mouvement des moyens de verrouillage/déverrouillage provoque la remontée du piston 32 et la mise en dépression de la chambre 33 du système anti-goutte 34. La rotation du bras porte-galet 21 des moyens de verrouillage/déverrouillage, qui après avoir franchi le premier bossage 28 est venu au contact du deuxième bossage 29 a coupé le passage éventuel de liquide puisque le canal 56 ménagé dans l'axe de poignée 19 n'est plus en coïncidence avec les parties correspondantes des canalisations. Ceci constitue une sécurité supplémentaire interdisant tout écoulement de liquide.

Par ailleurs, la rotation du bras porte-galet a exercé une traction sur la tige-relais 9 dont l'extrémité sphérique 10 après être venue en contact du système de clipsage 23 a provoqué l'ouverture de celui-ci. La traction exercée avant libération de la sphère 10 sur la tige relais 9 a fait pivoter le levier 8 jusqu'à la butée arrière 12 ce qui, par l'intermédiaire de la pièce de transmission 6 a provoqué le retrait du verrou 7 et libéré la vanne 14. A partir de ce moment, l'interruption de la circulation du liquide dans la canalisation est signalée par l'apparition du bouton 17 à l'extérieur du corps du dispositif 2.

La rotation du pignon denté 20 des moyens de verrouillage/déverrouillage provoque le déplacement vers le bas de la crémaillère de prise de puissance 31 dans son passage 102 ménagé à travers le corps de dispositif, ce qui entraîne la descente de l'organe de sectionnement 35, en appui contre la face F de la partie 3 la de la crémaillère 31, en direction de la partie sectionnable de la cassette. Lors de cette descente, la face inférieure de l'organe de sectionnement 35, qui constitue en fait la branche mobile d'une cisaille, et vient appuyer sur la partie sectionnable 42 de l'extension latérale de la cassette, et sectionne cette extension latérale au droit des entailles 43, en prenant appui sur la partie fixe de cisaille constituée par le support porte-cassette 38.

Lors de sa descente, l'organe de sectionnement 35 repousse par l'intermédiaire de sa face inférieure, la partie profilée 42 en cours de cisaillement, jusqu'à la séparation complète de l'extension latérale de la cassette de filtration 4.

Il convient de remarquer que dès que la partie profilée 42 de la cassette est complètement cisaillée, l'extrémité du poussoir-verrou 50 vient en butée contre les bords latéraux du canal débouchant 31c de la partie basse 31a de la crémaillère 31 sous l'action du ressort 51 rendant ainsi impossible une remontée éventuelle de la crémaillère de prise de puissance 31 en raison de la présence à l'arrière de la partie basse en forme de pied de l'organe de sectionnement 35, du poussoir-verrou 50.

Il est donc obligatoire à ce stade de poursuivre la manoeuvre d'ouverture jusqu'à son terme pour remplacer la cassette de filtration.

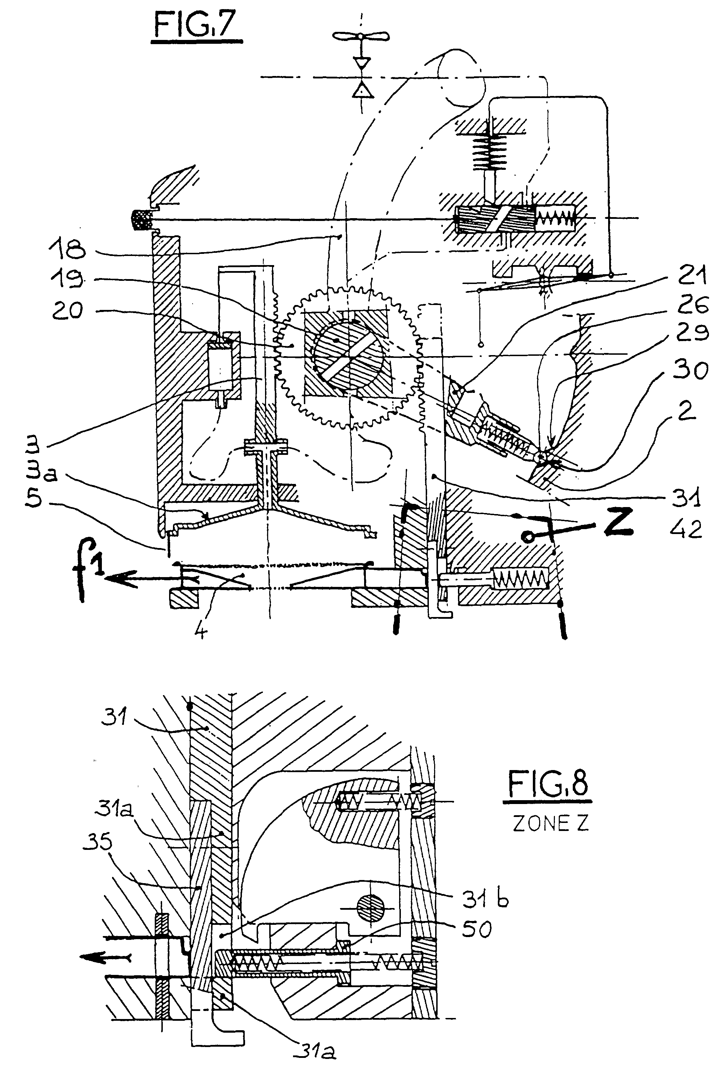

Les figures 7 et 8 correspondent à la fin du mouvement d'ouverture du dispositif lorsque les moyens de verrouillage/déverrouillage atteignent leur position de déverrouillage. Après franchissement du bossage 29 par le galet 26 et logement de celui-ci dans l'encoche 30 du corps de dispositif 2, les moyens de verrouillage/déverrouillage sont immobilisés en position de déverrouillage.

L'écran 5 est complètement relevé ce qui libère totalement l'accès au logement de la cassette de filtration, amputé de l'extension latérale sectionnée 42. La cassette de filtration peut donc être retirée dans le sens de la flèche f1.

La fin du mouvement de descente de la crémaillère 31 a provoqué l'éjection de l'extension sectionnée 42.

Par ailleurs, dès que l'évidement 31b est arrivé en face du logement auxiliaire de l'organe de blocage 50, ce dernier, sous l'action du ressort 51, pénètre dans l'évidement 31b au niveau de la partie de plus grande largeur L1 et empêche ainsi toute remontée de la crémaillère de prise de puissance 31.

En d'autres termes, tout retour, même voulu volontairement, des moyens de verrouillage/déverrouillage dans leur position de verrouillage est à ce stade rendu impossible.

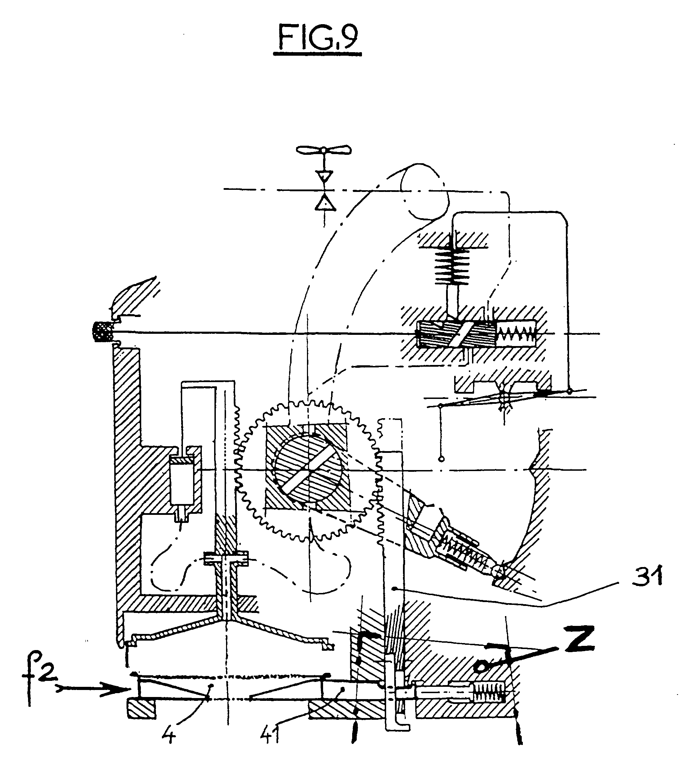

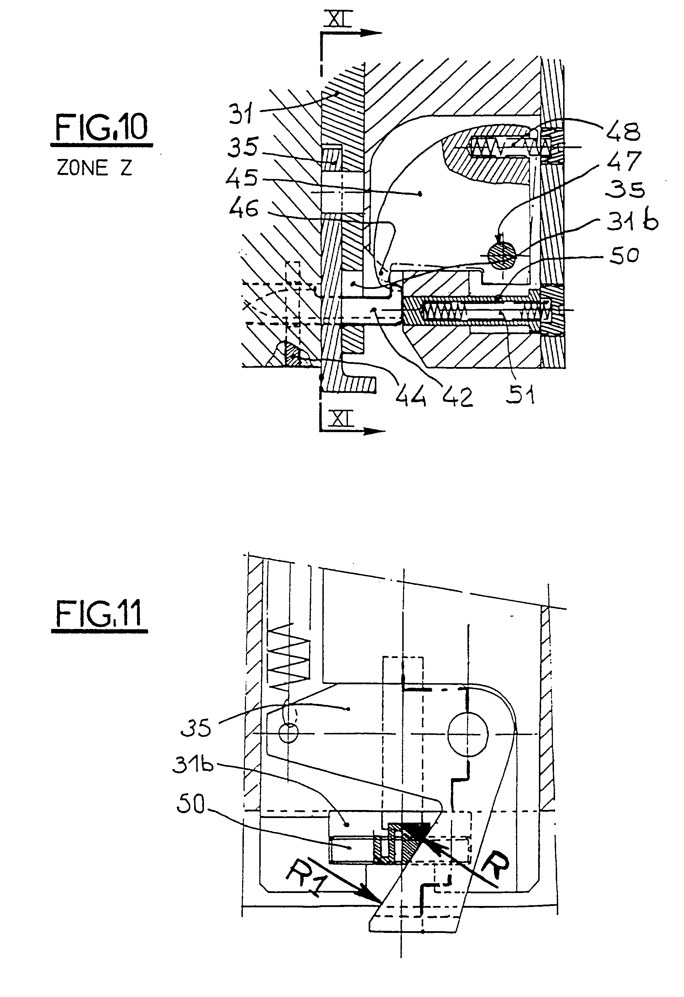

Les figures 9 à 11 correspondent à la mise en place d'une nouvelle cassette de filtration.

Il convient de remarquer ici que pour permettre aux moyens de verrouillage/déverrouillage, de revenir dans leur position de verrouillage, il faut obligatoirement pouvoir faire sortir le poussoir-verrou 50 de l'évidement 31b et le ramener à sa position initiale dans son logement auxiliaire 103 en comprimant le ressort 51, puisqu'un tel mouvement libèrera la crémaillère 31 qui pourra alors remonter.

Le seul accès possible au poussoir-verrou 50 se fait au travers de la grille 44, à l'aide d'une partie sectionnable 42 convenablement profilée, d'une nouvelle cassette de filtration par insertion de la cassette dans son logement suivant la flèche F2.

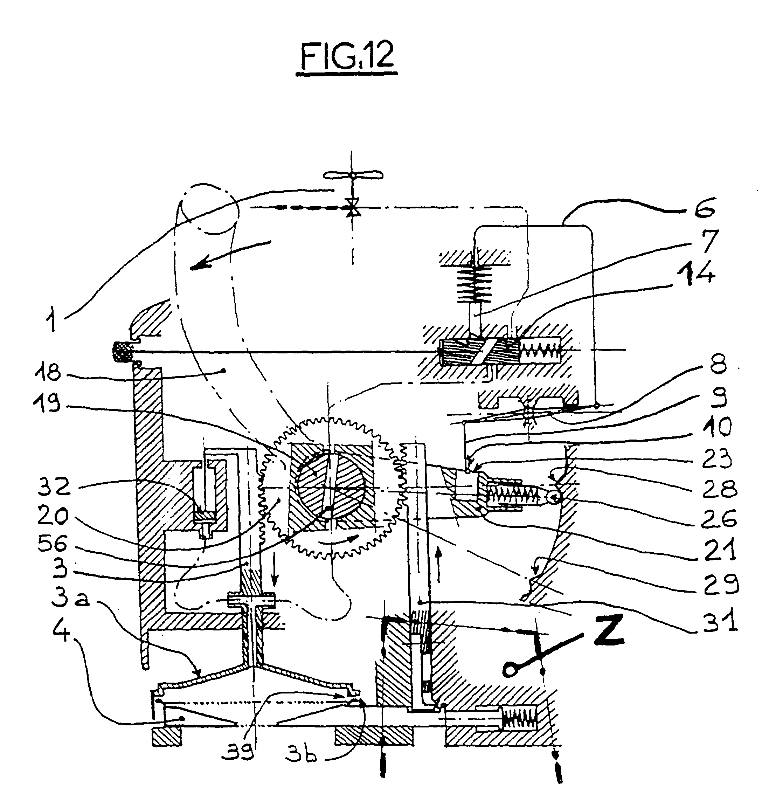

Le profil de l'extension latérale sectionnable de la cassette comporte en l'espèce une rampe inclinée R qui, lors de sa pénétration dans le logement annexe de la cassette, vient affleurer la rampe R1 homologue de la partie inférieure inclinée de l'organe de sectionnement 35 sans percuter ce dernier (figure 11); le mouvement d'insertion de l'extension latérale 42 de la nouvelle cassette de filtration, après passage dans la grille 44, et franchissement de l'organe de sectionnement 35, se poursuit jusqu'à la rencontre de la pente inclinée de l'extrémité en forme de crochet 46 du secteur pivotant 45. Il se produit alors un mouvement relatif de l'extrémité inclinée du crochet 105 de l'extension 42 par rapport à celle du crochet 46, permettant le soulèvement de ce dernier par pivotement sous rappel élastique du secteur pivotant 45. Lorsque l'extrémité de l'extension 42 est venue en butée contre le corps du dispositif en ayant repoussé complètement l'organe de blocage dans son logement auxiliaire, le crochet 46, vient bloquer l'extension latérale 42 dans la partie annexe 100 de logement, et par conséquent la cassette de filtration dans son logement, par pivotement du secteur 45 sous l'effet du ressort 48.

On remarquera donc ici que à ce stade des opérations, la cassette de filtration nouvellement engagée est indémontable. Pour pouvoir l'extraire il faut obligatoirement sectionner sa partie sectionnable.

Les figures 12 à 14 correspondent à la phase de retour des moyens de verrouillage/déverrouillage dans leur position de verrouillage.

Ceux-ci sont actionnés par l'utilisateur de telle sorte que le galet 26 parvient, après franchissement du bossage 29, jusqu'au bossage 28. Ce mouvement provoque la préfermeture de la chambre conique 3a en raison du mouvement descendant de la crémaillère porte-chambre 3, la couronne d'appui 3b venant au contact du joint d'étanchéité 39 porté par la nouvelle cassette de filtration 4. Simultanément, le piston 32 du système anti-goutte 34 descend dans sa chambre.

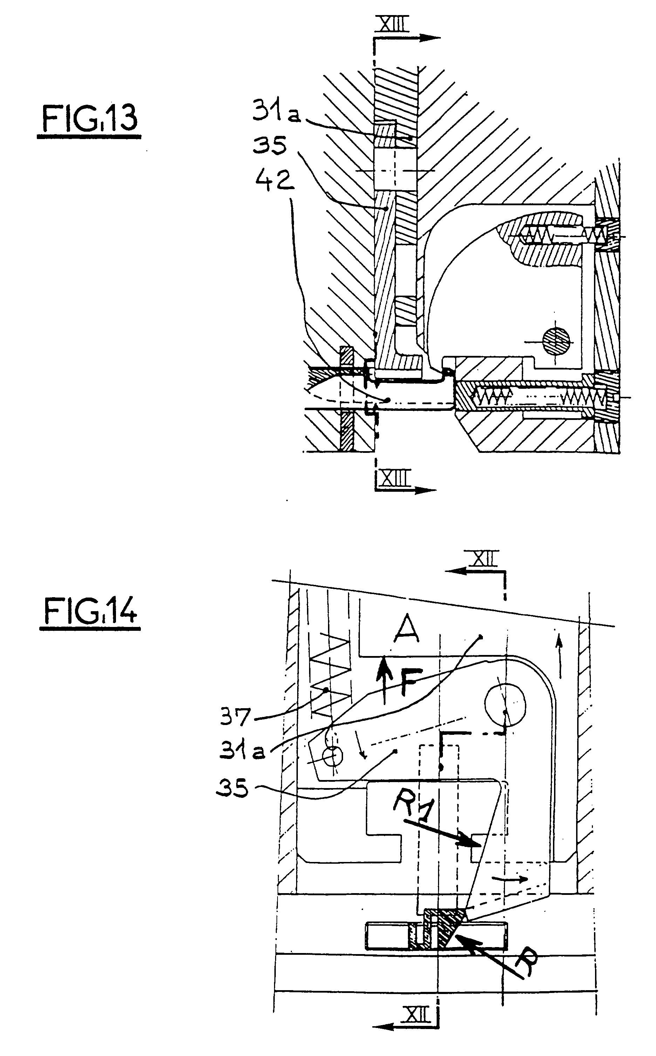

La rotation du pignon denté 20, provoque la remontée dans le passage de guidage 101 de la crémaillère 31 équipée de l'organe de sectionnement 35. Ce dégagement de l'organe de sectionnement de l'extension latérale de la cassette, et par conséquent la remontée de la crémaillère 31, est permis par le fait que la rampe R1 de la partie inférieure inclinée de l'organe de sectionnement 35, en frottant sur la rampe R de l'extension latérale 42 lors de sa remontée, créé un couple visant à faire tourner l'organe de sectionnement 35 de sorte que celui-ci se dégage de l'extension latérale 42 sans détériorer cette dernière (figure 14).

L'organe de sectionnement 35 pivote ensuite tout en remontant pour se libérer complètement de l'extension latérale 42 et reprend sa position initiale en appui sur la face F de la crémaillère 31 sous l'action du ressort de rappel 37.

Le retour dans la position de verrouillage provoque le retour de la crémaillère 3 vers le bas.

Le piston 32 redescend dans sa chambre et la chambre conique 3a vient au contact du joint d'étanchéité 39 porté par le nouveau moyen de filtration 4, par l'intermédiaire de sa couronne d'appui 3b.

La rotation du bras porte-galet 21 ramène le système de clipsage 23 au contact de la sphère d'extrémité de la tige relais 9 qui reste bloquée en position immobile car le levier 8 est lui-même immobilisé en position par le maintien en appui du verrou 7 contre la surface latérale de la vanne 14 par l'intermédiaire de la pièce de transmission 6.

Le canal 56 s'aligne partiellement en face des arrivée 55 et sortie 57 des parties correspondantes de la canalisation, ce qui provoquerait un écoulement d'eau si la vanne 14 n'était pas maintenue dans sa deuxième position, pour le cas bien sûr où le robinet 1 serait resté ouvert pendant toute cette opération.

Lorsque l'utilisateur termine son action sur la poignée 18, provoquant ainsi le franchissement du bossage 28 par le galet 26, les moyens de verrouillage/déverrouillage sont bloqués en position de verrouillage, la chambre conique 3a venant appuyer par la couronne d'appui 3b sur le joint d'étanchéité 39 du moyen de filtration 4, pour assurer l'étanchéité. La pression d'appui nécessaire est maintenue par le ressort de galet 25. Cette pression peut éventuellement être augmentée en modifiant le chemin de roulement 27 au-delà du bossage 38.

La fin de rotation du bras porte-galet 21 fait rentrer la sphère d'extrémité de la tige relais 19 dans l'évidement borgne 22 après franchissement du système de clipsage 23.

Il convient de remarquer que la distance séparant les bossage 28 et 29 est ici ajustée de telle sorte qu'il est nécessaire que le galet 26 franchisse complètement ces bossages pour permettre aux moyens de verrouilage/déverrouillage de se situer dans leur position de verrouillage ou de déverrouillage.

La mise en service du dispositif de filtration avec la nouvelle cassette de filtration 4 ne peut être effectuée qu'après enfoncement du bouton de réarmement 17, qui, par l'intermédiaire de la tige de commande manuelle 16, replace la vanne 14 dans première position après compression du ressort de vanne 15 et encliquetage du verrou 7 dans l'encoche correspondante sous l'action du ressort de verrou 13. Simultanément, la pièce de transmission 6 est ramenée à sa position d'origine.

Le levier 8 constitue en fait une sécurité supplémentaire pour le cas où le levier 18 des moyens de verrouillage/déverrouillage serait manoeuvré accidentellement pendant la période d'utilisation du dispositif de filtration. En effet, une telle manoeuvre entraînerait l'obturation de la canalisation par les moyens de verrouillage/déverrouillage en cas de franchissement du bossage 28 par le galet 26. En effet, le mouvement de rotation ainsi provoqué entraîne la sphère d'extrémité de la tige relais 9 vers le bas par l'ensemble de clipsage 23. Le levier 8, n'étant pas bloqué, pivoterait alors et, par action sur la pièce de transmission 6, tirerait le verrou 9 en débloquant la vanne 14 et coupant ainsi de ce fait la circulation du liquide. Cet incident serait signalé par la réapparition du bouton de réarmement 17.

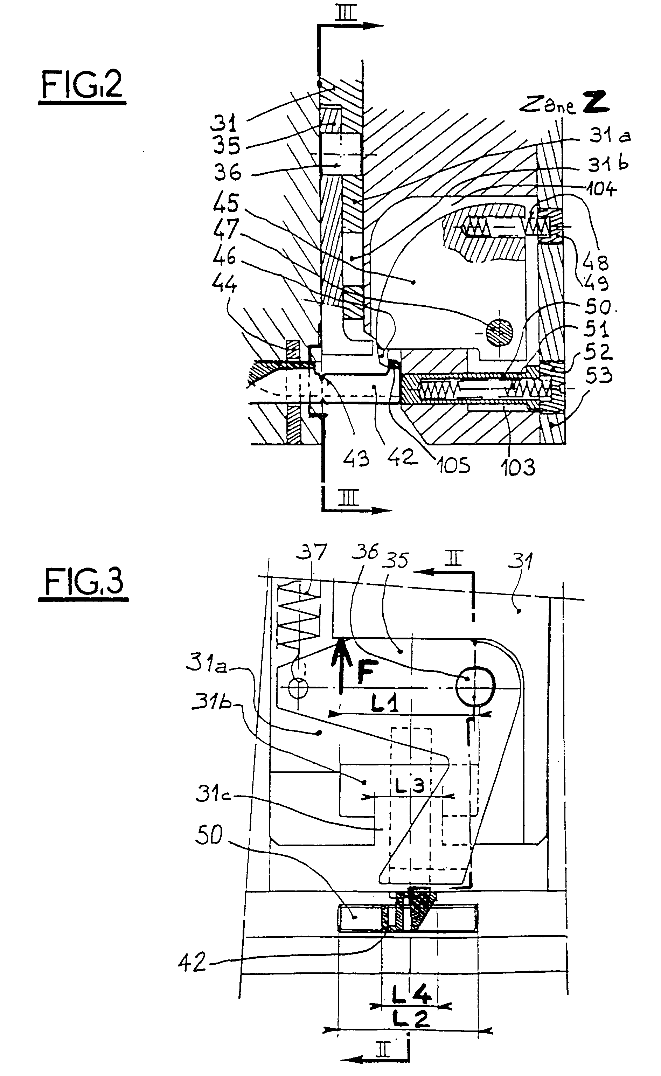

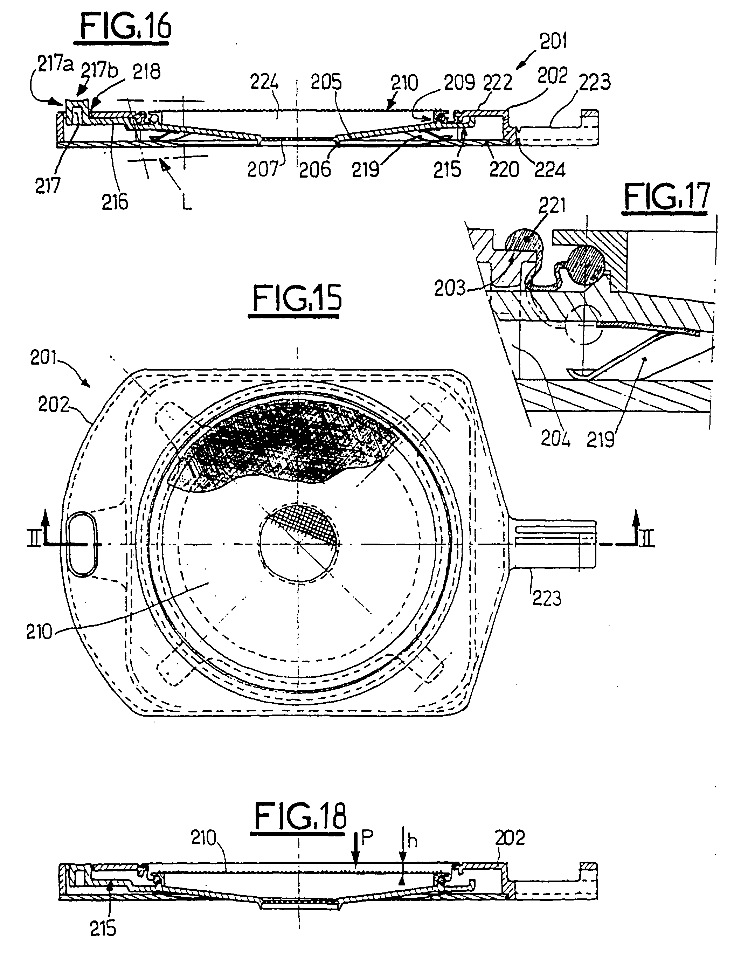

On va maintenant décrire d'autres modes de réalisation d'une cassette pour le dispositif selon l'invention illustrés sur les figures 15 à 20, qui peuvent être insérés dans un dispositif tel que celui décrit en référence aux figures 1 à 14.

Si l'on se réfère plus particulièrement aux figures 15 à 18, on voit que la cassette 201 selon l'invention comporte un corps 202 pourvu d'un passage traversant 224 obturé par une membrane de filtration 210 montée sensiblement perpendiculairement à la direction générale du passage 224, c'est-à-dire perpendiculairement à la direction d'arrivée du fluide à filtrer.

Cette membrane 210 est fixée sur un support de membrane ou platine 215, monté déplaçable en translation par rapport au corps 202, sous rappel élastique 219, dans une direction sensiblement parallèle à la direction générale du passage traversant 224. La platine 215 comporte par ailleurs un cône de recueil 205 des liquides filtrés, dont le sommet est pourvu d'une ceinture 206 constituant avec une grille de moussage 207 une structure de douchette destinée à homogénéiser le liquide filtré à la sortie de la cassette. Cette grille de moussage 207 peut être venue directement de moulage lors de la fabrication du corps 202 ou bien rapportée.

Une rondelle-ressort 219, assurant le rappel élastique, est maintenue comprimée entre la platine 215 et une plaque de fermeture 220 du dispositif lié au corps 202.

Cette platine 215 comporte par ailleurs une extension 216 portant à son extrémité une saillie 217 susceptible de traverser un passage correspondant 218 ménagé dans la face supérieure 222 du corps 202. A la base évasée du cône de recueil 205, la platine 215 comporte un élément de support 209 sur lequel est fixée la membrane 210. Par ailleurs, un joint- soufflet 221, assurant une liaison étanche mobile entre la platine 215 et le corps 202, repose par l'une de ses extrémités, sur un appui de joint 203 du corps 202, supporté par une nervure de renfort 204 capable de supporter la pression de fermeture nécessaire à l'obtention d'étanchéité lors de l'utilisation de la cassette.

La figure 18 illustre la configuration de la cassette de filtration dans une utilisation normale sans déchirure de membrane lorsqu'elle est soumise à la pression normale P du fluide à filtrer.

La force de pression exercée par le fluide à filtrer sur la membrane 210 se transmet sur la platine 215 qui s'enfonce dans le corps 202 d'une course h autorisée par le ressort 219. A cet effet, le ressort 219 est taré de telle manière que la course h, en présence d'une pression normale P du fluide à filtrer, soit comprise entre la moitié et les 4/5 de la course totale admissible. Le reste de cette course pourra ainsi être utilisé en réserve pour absorber les surpressions accidentelles dans les canalisations de fluide.

Dans cette configuration, la course h et les dimensions de la saillie 217 sont choisies de façon à ce que la saillie 217 n'émerge pas de la face supérieure 222 du corps 202.

Par contre, toute déchirure de la membrane, créant une fuite, rétablit l'équilibre des pressions des deux côtés de celle-ci, ce qui provoque une remontée de la platine 215 dans le corps sous l'action du ressort 219 en faisant émerger la saillie 217 pour signaler cette anomalie à l'utilisateur. (La figure 16 représente une telle configuration bien que sur cette figure la membrane ait été volontairement représentée non déchirée). A cet effet, on pourra par exemple teinter le pourtour latéral 217a de la saillie 217 à l'aide d'une peinture couleur vive fluorescente pour mettre en évidence l'émergence de la saillie 217 hors du corps. De même, on pourra par exemple teinter le sommet 217b de la saillie 217 de la même couleur que celle de la face supérieure 222 afin que la saillie 217 puisse se confondre avec la platine 215 lorsque celle-ci est dans sa position enfoncée.

L'utilisateur pourra ainsi détecter facilement visuellement par exemple à travers une fenêtre d'un bloc de filtration dans lequel serait incorporée la cassette de filtration, l'émergence de la saillie signifiant une déchirure de la membrane. On pourrait néanmoins utiliser d'autres moyens de signalisation par exemple un système de contacts électriques, disposés d'une part sur le sommet 217b de la saillie et sur un élément homologue du bloc de filtration, et reliés à un voyant lumineux.

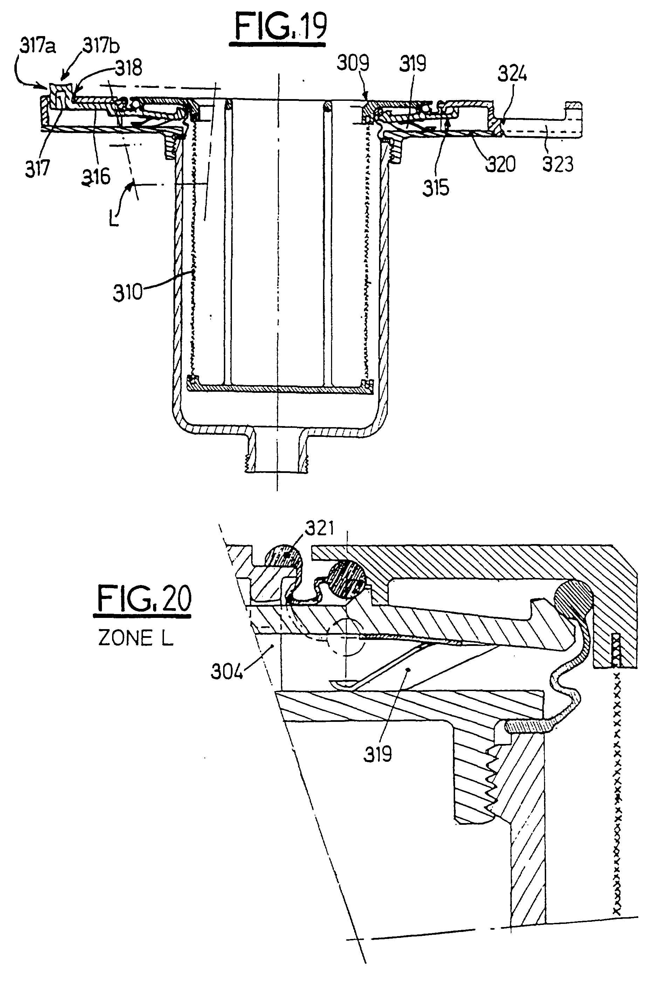

Les figures 19 et 20 illustrent un mode de réalisation d'une cassette de filtration dans laquelle la membrane est montée sensiblement parallèlement à la direction générale du passage traversant du corps. Sur ces deux figures, les éléments analogues ou ayant des fonctions analogues à ceux représentés sur les figures 15 à 18 sont augmentées de 100 par rapport à celles qu'ils avaient sur ces figures. Seules les différences entre les figures 19 et 20 et les figures 15 à 18 seront maintenant décrites.

L'élément de support 309 comporte une partie supérieure solidaires de la platine 315 et une partie inférieure entre lesquelles la membrane de filtration 310, cylindrique, est disposée sensiblement parallèlement à la direction générale du passage traversant du dispositif. Le déplacement de la membrane de filtration est provoqué par le déplacement longitudinal de la partie inférieure du support 309 transmettant ce déplacement à la platine 315.

Une telle cassette peut être insérée dans un dispositif tel que celui décrit en référence aux figures 1 à 14. Dans ce cas le corps de la cassette comprend une extension latérale sectionnable 223, 323, par le dispositif de façon notamment à différencier une cassette neuve d'une cassette usagée lors du remplacement des cassettes analogue à l'extension sectionnable 42. Plus précisément l'extension latérale comporte à cet effet des entailles 224, 324 analogues aux entailles 43 formant une zone d'affaiblissement pour le sectionnement.

## Revendications

1. Dispositif de filtration d'un fluide, comprenant
une cassette de filtration (4) du fluide destinée à délivrer un fluide filtré et comportant un corps de cassette équipé d'une membrane de filtration, ledit corps de cassette possédant une extension latérale comportant une partie (42) sectionnable et complètement séparable du reste de la cassette, et
un corps de dispositif (2) comportant une entrée de fluide, communiquant avec un logement recevant ladite cassette de filtration (4), une sortie pour le fluide filtré, des moyens de verrouillage/déverrouillage actionnables entre une position de verrouillage de la cassette de filtration dans son logement et une position de déverrouillage de la cassette de filtration,
**caractérisé par le fait que** ledit corps comprend des moyens de sectionnement (31,35) actionnés par les moyens de verrouillage/déverrouillage lors du passage de leur position de verrouillage à leur position de déverrouillage pour sectionner la partie sectionnable (42) de la cassette de filtration, et des moyens de sécurité (44,35,50) aptes à interdire le verrouillage dans son logement, par les moyens de verrouillage/déverrouillage, d'une cassette de filtration amputée d'une telle partie sectionnable (42).

2. Dispositif selon la revendication 1, **caractérisé par le fait que** les moyens de verrouillage/déverrouillage comportent un pignon denté (20) susceptible d'être déplacé en rotation entre une position de verrouillage et une position de déverrouillage,
**par le fait que** le logement de la cassette (4) comporte une partie annexe (100) apte à loger la partie sectionnable (42) de ladite cassette,
**par le fait que** les moyens de sectionnement comportent une première crémaillère (31) coopérant avec le pignon denté (20), pour être guidée dans un passage (102) du corps débouchant dans le logement annexe (100) de la cassette en direction de la partie sectionnable (42) de la cassette (4), lors du passage de la position de verrouillage à la position de déverrouillage, ainsi qu'un organe de sectionnement (35) susceptible de pénétrer dans ladite partie annexe de logement de la cassette lors du déplacement de la première crémaillère (31) pour sectionner la partie sectionnable (42) de la cassette (4).

3. Dispositif selon la revendication 2, **caractérisé par le fait que** les moyens de verrouillage/déverrouillage comportent une deuxième crémaillère (3) coopérant avec ledit pignon denté (20), guidée en translation et possédant à une extrémité un moyen d'appui destiné à venir en contact de la cassette de filtration (4) dans la position de verrouillage et à être maintenu à distance de la cassette dans la position de déverrouillage,
**par le fait que** les moyens de sécurité comportent un organe de blocage (50) logé dans un logement auxiliaire (102) du corps, débouchant dans ladite partie annexe du logement de la cassette, monté déplaçable dans le logement auxiliaire pour pénétrer dans ladite partie annexe du logement de la cassette après sectionnement de la partie sectionnable (42) de cette dernière, et prendre une position de blocage dans laquelle il coopère avec l'organe de sectionnement (35) pour interdire sa remontée dans le passage et donc le retour des moyens de verrouillage/déverrouillage dans leur position de verrouillage jusqu'à l'insertion dans ladite partie annexe du logement de la cassette d'une partie sectionnable d'une nouvelle cassette.

4. Dispositif suivant la revendication 3, **caractérisé par le fait que** dans ladite position de blocage de l'organe de blocage (50), l'organe de sectionnement (35) obture au moins partiellement ladite partie annexe de logement,
**par le fait que** la partie sectionnable (42) de la cassette (4) et l'organe de sectionnement (35) comportent des profils conjugués prédéterminés (R, R1) aptes à coopérer mutuellement pour autoriser l'insertion de la partie sectionnable (42) dans ladite partie annexe de logement lors de l'insertion de la cassette dans son logement, et
**par le fait que** la partie sectionnable ainsi insérée dans la partie annexe de logement est apte à déplacer l'organe de blocage depuis sa position de blocage vers une position de déblocage dans laquelle il est exempt de contact avec l'organe de sectionnement pour permettre la remontée de ce dernier et le retour des moyens de verrouillage/déverrouillage dans leur position de verrouillage.

5. Dispositif selon la revendication 4, **caractérisé par le fait que** l'organe de blocage (50) est repoussé dans sa position de déblocage sous rappel élastique (51), et **par le fait que** le dispositif comporte un moyen de blocage auxiliaire (45, 46) de la partie sectionnable (42) de la cassette dans ladite partie annexe de logement.

6. Dispositif selon l'une des revendications 1 à 5, **caractérisée par le fait que** l'extension latérale (41) est munie d'une zone d'affaiblissement (43).

7. Dispositif selon l'une des revendications 1 à 6, **caractérisé par le fait que** le corps de cassette est pourvu d'un passage traversant obturé par une membrane de filtration (210, 310) fixée sur un support de membrane logé dans le corps de cassette, ce support de membrane étant monté déplaçable en translation par rapport au corps de cassette dans une direction sensiblement parallèle à la direction générale du passage traversant.

8. Procédé de remplacement de la cassette de filtration verrouillée dans un logement d'un dispositif tel que défini dans l'une des revendications 1 à 7, **caractérisé par le fait qu'**on sectionne, lors de l'actionnement des moyens de verrouillage/déverrouillage, la partie sectionnable de la cassette, et on ampute complètement la cassette de la partie sectionnée pour permettre l'extraction de la cassette hors du logement, et **par le fait qu'**on interdit le verrouillage de toute cassette de remplacement amputée d'une telle partie sectionnable, en empêchant l'actionnement des moyens de verrouillage/déverrouillage.

## Claims

1. A filter for filtering a fluid, comprising:
a cassette (4) for filtering the fluid adapted to deliver a filtered fluid and including a cassette body equipped with a filter membrane, said cassette body having a lateral extension including a portion (42) that can be cut off and separated completely from the remainder of the cassette, and
a filter body (2) including a fluid inlet communicating with a housing for said filter cassette (4), an outlet for the filtered fluid, locking/unlocking means operable between a position for locking the filter cassette in its housing and a position for unlocking the filter cassette, **characterized in that** said body includes cutting means (31, 35) actuated by the locking/unlocking means on passing from their locking position to their unlocking position to cut the part (42) of the filter cassette that can be cut off, and safety means (44, 35, 50) adapted to prevent the locking/unlocking means locking into its housing a filter cassette from which the part (42) that can be cut off has been amputated.

2. A filter according to claim 1, **characterized in that** the locking/unlocking means include a toothed wheel (20) adapted to be rotated between a locking position and an unlocking position, the housing of the cassette (4) includes an ancillary part (100) adapted to accommodate the part (42) of said cassette that can be cut off, and the cutting means include a first rack (31) cooperating with the toothed wheel (20) and guided in a passage (102) of the body opening into the ancillary housing (100) of the cassette in the direction of the part (42) of the cassette (4) that can be cut off on moving from the locking position to the unlocking position and a cutting member (35) adapted to penetrate said ancillary housing part of the cassette on movement of the first rack (31) to cut off the part (42) of the cassette (4) that can be cut off.

3. A filter according to claim 2, **characterized in that** the locking/unlocking means include a second rack (3) cooperating with said toothed wheel (20), guided in translation and having at one end bearing means adapted to come into contact with the filter cassette (4) in the locking position and to be held away from the cassette in the unlocking position, and the safety means include an immobilizing member (50) housed in an auxiliary housing (102) of the body, opening into said ancillary housing part of the cassette, movably mounted in the auxiliary housing to penetrate said ancillary housing part of the cassette after the part (42) of the latter that can be cut off has been cut off, and adapted to assume an immobilizing position in which it cooperates with the cutting member (35) to prevent retrograde movement thereof in the passage and thereby prevent the return of the locking/unlocking means to their locking position until a part of a new cassette that can be cut off is inserted in said ancillary part of the housing of the cassette.

4. A filter according to claim 3, **characterized in that**, in said immobilizing position of the immobilizing member (50), the cutting member (35) at least partly shuts off said ancillary housing part, the part (42) of the cassette (4) that can be cut off and the cutting member (35) have predetermined conjugate profiles (R, R1) adapted to cooperate with each other to allow insertion of the part (42) that can be cut off in said ancillary housing part during insertion of the cassette into its housing, and the part that can be cut off when inserted in this way into the ancillary housing part is adapted to move the immobilizing member from its immobilizing position to a releasing position in which it has no contact with the cutting member and allows retrograde movement thereof and return of the locking/unlocking means to their locking position.

5. A filter according to claim 4, **characterized in that** the immobilizing member (50) is spring-loaded (51) into its releasing position and the filter includes auxiliary immobilizing means (45, 46) for immobilizing the part (42) of the cassette that can be cut off in said ancillary housing part.

6. A filter according to any of claims 1 to 5, **characterized in that** the lateral extension (41) is provided with a relatively weaker area (43).

7. A filter according to any of claims 1 to 6, **characterized in that** the cassette body is provided with a passage through it shut off by a filter membrane (210, 310) fixed to a membrane support accommodated in the cassette body and mounted so that it can move in translation relative to the cassette body in a direction substantially parallel to the general direction of the passage.

8. A method of replacing a filter cassette locked into a housing of a filter as defined in any of claims 1 to 7, **characterized in that**, on actuation of the locking/unlocking means, the part of the cassette that can be cut off is cut off and the cassette is amputated completely from the part that can be cut off so that the cassette can be extracted from the housing and the locking of a replacement cassette from which the part that can be cut off has been amputated is prevented by preventing actuation of the locking/unlocking means.

## Patentansprüche

1. Vorrichtung zur Filtration eines Fluids, die
eine Kassette (4) zur Filtration des Fluids, welche ein filtriertes Fluid liefern soll, und einen mit einer Filtrationsmembran versehenen Kassettenrumpf aufweist, wobei der Kassettenrumpf eine seitliche Erweiterung mit einem abtrennbaren und vom Rest der Kassette vollständig trennbaren Teil (42) besitzt, und
einen Vorrichtungsrumpf (2) mit einem Fluideingang, der mit einem Sitz kommuniziert, welcher die Filtrationskassette (4) aufnimmt, einem Ausgang für das filtrierte Fluid, Mittel zur Verriegelung/Entriegelung, die zwischen einer Verriegelungsposition der Filtrationskassette in ihrem Sitz und einer Entriegelungsposition der Filtrationskassette betätigbar sind, umfasst,
**dadurch gekennzeichnet, dass** der Rumpf Mittel zum Abtrennen (31, 35), welche durch die Mittel zur Verriegelung/Entriegelung beim Übergang ihrer Verriegelungsposition in ihre Entriegelungsposition betätigt werden, um den abtrennbaren Teil (42) der Filtrationskassette abzutrennen, und Sicherungsmittel (44, 35, 50), welche geeignet sind die Verriegelung in ihrem Sitz durch die Mittel zur Verriegelung/Entriegelung einer um einem solchen abgetrennten Teil (42) entledigten Filtrationskassette zu hemmen, umfasst.

2. Vorrichtung nach Anspruch 1, **dadurch gekennzeichnet, dass** die Mittel zur Verriegelung/Entriegelung ein Ritzel (20) aufweisen, welches geeignet ist zwischen einer Verriegelungsposition und einer Entriegelungsposition in Drehung versetzt zu werden,
dass der Sitz der Kassette (4) einen Erweiterungsteil umfasst, welcher geeignet ist, den abtrennbaren Teil (42) der Kassette aufzunehmen,
dass die Mittel zum Abtrennen eine mit dem Ritzel (20) zusammenwirkende erste Zahnstange (31) umfassen, um in einen Durchgang (102) des Rumpfs, welcher in den erweiterten Sitz (100) der Kassette mündet, in Richtung des abtrennbaren Teils (42) der Kassette (4) beim Übergang der Verriegelungsposition in die Entriegelungsposition geführt zu werden, sowie ein Organ zum Abtrennen (35), welches geeignet ist in den Erweiterungsteil des Kassettensitzes beim Verschieben der ersten Zahnstange (31) einzudringen, um den abtrennbaren Teil (42) der Kassette (4) abzutrennen.

3. Vorrichtung nach Anspruch 2, **dadurch gekennzeichnet, dass** die Mittel zur Verriegelung/Entriegelung eine mit dem Ritzel (20) zusammenwirkende zweite Zahnstange (3) umfassen, welche in Translation geführt ist und an einem Ende ein Stützmittel besitzt, welches in der Verriegelungsposition in Kontakt mit der Filtrationskassette (4) kommen soll und in der Entriegelungsposition auf Abstand zur Kassette gehalten werden soll,
dass die Sicherungsmittel ein Blockierungsorgan (50) umfassen, das in einem in den Erweiterungsteil des Kassettensitzes mündenden zusätzlichen Sitz (102) des Rumpfs aufgenommen ist, welches in dem zusätzlichen Sitz verschiebbar montiert ist um in den Erweiterungsteil des Kassettensitzes nach Abtrennen des abtrennbaren Teils (42) dieses letzteren einzudringen, und eine Blockierungsposition einzunehmen, in welcher es mit dem Abtrennorgan (35) zusammenwirkt um sein Heben in den Durchgang und folglich das Rückkehren der Mittel zur Verriegelung/Entriegelung in ihre Verriegelungsposition bis zum Einfügen in den Erweiterungsteil des Kassettensitzes eines abtrennbaren Teils einer neuen Kassette zu verhindern.

4. Vorrichtung nach Anspruch 3, **dadurch gekennzeichnet, dass** in der Blockierungsposition des Blockierungsorgans (50) das Abtrennorgan (35) wenigstens teilweise den Erweiterungsteil des Sitzes verschließt,
dass der abtrennbare Teil (42) der Kassette (4) und das Abtrennorgan (35) vorbestimmte Gegenprofile (R, R1) umfassen, welche geeignet sind zusammenzuwirken um das Einfügen des abtrennbaren Teils (42) in den Erweiterungsteil des Sitzes beim Einfügen der Kassette in ihren Sitz zu ermöglichen, und
dass der so in den Erweiterungsteil des Sitzes eingefügte abtrennbare Teil geeignet ist, das Blockierungsorgan von seiner Blockierungsposition bis zu einer Entblockierungsposition, in welcher es keinen Kontakt mit dem Abtrennorgan hat, um das Heben dieses letzteren und die Rückkehr der Mittel zur Verriegelung/Entriegelung in ihre Verriegelungsposition zu ermöglichen, zu verschieben.

5. Vorrichtung nach Anspruch 4, **dadurch gekennzeichnet, dass** das Blockierungsorgan (50) unter einer elastischen Rückstellkraft (51) in seine Entblockierungsosition zurückgedrückt wird, und dass die Vorrichtung ein zusätzliches Mittel zur Blockierung (45, 46) des abtrennbaren Teils (42) der Kassette in dem Erweiterungsteil des Sitzes umfasst.

6. Vorrichtung nach einem der Ansprüche 1 bis 5, **dadurch gekennzeichnet, dass** die seitliche Erweiterung (41) mit einer Schwächungszone (43) versehen ist.

7. Vorrichtung nach einem der Ansprüche 1 bis 6, **dadurch gekennzeichnet, dass** der Kassettenrumpf mit einem Querdurchgang versehen ist, welcher von einer Filtrationsmembran (210, 310) verschlossen ist, die auf einem in dem Kassettenrumpf aufgenommenen Membranträger befestigt ist, wobei dieser Membranträger in Bezug auf den Kassettenrumpf in einer Richtung, welche im wesentlichen parallel zur Hauptrichtung des Querdurchgangs ist, in Translation verschiebbar montiert ist.

8. Verfahren zum Auswechseln der in einem Sitz einer Vorrichtung nach einem der Ansprüche 1 bis 7 verriegelten Filtrationskassette, **dadurch gekennzeichnet, dass** bei der Betätigung der Mittel zur Verriegelung/Entriegelung der abtrennbare Teil der Kassette abgetrennt wird, und man die Kassette vollständig des abtrennbaren Teils entledigt, um das Herausziehen der Kassette aus dem Sitz zu ermöglichen, und dass die Verriegelung jeder Austauschkassette, die eines solchen abtrennbaren Teils entledigt wurde, gehemmt wird, indem die Betätigung der Mittel zur Verriegelung/Entriegelung verhindert wird.
